# EUROPÄISCHE PATENTSCHRIFT

(11) **EP 3 375 662 B1**
(45) Veröffentlichungstag und Bekanntmachung des Hinweises auf die Patenterteilung: **26.02.2020**
(21) Anmeldenummer: 18161423.1
(22) Anmeldetag: 13.03.2018
(51) Int. Cl.: B60P 7/08

(54) **RATSCHENSPANNVORRICHTUNG**
RATCHET DEVICE
DISPOSITIF DE SERRAGE DE CLIQUETS

(30) Priorität: 15.03.2017 DE 102017105545; 18.01.2018 DE 202018100281 U
(43) Veröffentlichungstag der Anmeldung: 19.09.2018
(73) Patentinhaber: PWP SA, CH-1530 Payerne (CH)
(72) Erfinder: Gijsbers, Erik, 3232 Ins (CH); Suer, Arne, 42859 Remscheid (DE)
(74) Vertreter: Müller, Enno

(56) Entgegenhaltungen:
- EP-A1- 2 551 152
- EP-A2- 2 860 062
- DE-A1-102004 059 339
- FR-A3- 3 053 644

## Beschreibung

### Gebiet der Technik

Die Erfindung betrifft eine Ratschenspannvorrichtung nach den Merkmalen des Oberbegriffes des Anspruchs 1.

### Stand der Technik

Ratschenspannvorrichtungen der in Rede stehenden Art sind bekannt. Über diese kann mittels eines Gurtes oder dergleichen bspw. das Frachtgut eines Lastkraftwagens während des Fahrbetriebs durch Verzurren des Gurtes gegen übermäßige Schwankungen bzw. Verrutschen gesichert werden. Auch sind Ratschenspannvorrichtungen mit Antriebsachsen bekannt, über welche bspw. die Seitenplanen eines Lastkraftwagens gespannt werden können. Über die Handbedienung einer Bedienperson wird der Ratschenhebel in bekannter Weise schwenkbeweglich betätigt, wobei zumeist eine Sperrklinke oder dergleichen in Eingriff mit dem Ratschenzahnrad steht, über welches der Spannhub auf eine Antriebsachse übertragen wird, um so einen Gurt oder eine Plane zu spannen. Eine solche Ratschenspannvorrichtung ist beispielsweise aus der DE 10 2004 059 339 A1 (EP 1 642 683 A1) bekannt.

Aus der EP 2 551 152 B1 ist eine Ratschenspannvorrichtung bekannt, bei der ein mit einer Bügelfeder zusammenwirkendes Teil vorgesehen ist, das lediglich um die Achse des Ratschenzahnrades verschwenkbar ist.

### Zusammenfassung der Erfindung

Ausgehend von dem dargelegten Stand der Technik beschäftigt sich die Erfindung mit der Aufgabenstellung, eine insbesondere hinsichtlich einer Sicherung in der Grundstellung vorteilhafte Ratschenspannvorrichtung anzugeben.

Diese Aufgabe ist beim Gegenstand des Anspruches 1 gelöst, wobei darauf abgestellt ist, dass an dem Ratschenhebel eine beweglich angeordnete Klinke vorgesehen ist und dass die Klinke ein Sicherungsteil aufweist, zur Zusammenwirkung mit dem Gegensperrabschnitt.

Die federabgestützte, bewegliche Lagerung des Gegensperrabschnitts bietet eine hohe Funktionssicherheit. Darüber hinaus ist durch diese Ausgestaltung die Handhabung der Ratschenspannvorrichtung verbessert. Der Gegensperrabschnitt kann von dem mit diesem zusammenwirkenden Klinkenabschnitt des Ratschenhebels zunächst in bekannter Weise überlaufen werden, dies unter Verlagerung des Gegensperrabschnittes durch den Klinkenabschnitt. Die auf den Gegensperrabschnitt wirkende Federkraft belastet den Gegensperrabschnitt in Richtung auf dessen Grundstellung, die der Verriegelungsstellung entspricht.

Auch ist durch diese Ausgestaltung ermöglicht, die Ratschenspannvorrichtung insgesamt funktionssicherer auszugestalten, dies auch unter Berücksichtigung möglicher Verschmutzungen oder auch einer möglichen Vereisung des Vorrichtungs-Eingerichtes.

Die an dem Ratschenhebel beweglich angeordnete Klinke weist ein Sicherungsteil auf. Das Sicherungsteil kann eine Sicherungsfläche aufweisen, die von dem Gegensperrteil bzw. einer bestimmten Fläche des Gegensperrteils, in der gesicherten Grundstellung übergriffen sein kann.

Die an dem Ratschenhebel beweglich angebrachte Klinke kann mit einem zum Eingriff in das Ratschenzahnrad vorgesehenen Sperrabschnitt ausgebildet sein. Der Sperrabschnitt kann auch mit der Klinke einteilig ausgebildet sein. Hierdurch, insbesondere bei der genannten einteiligen Ausbildung, ist gegenüber dem bekannten Stand der Technik ein vereinfachter Aufbau der Ratschenspannvorrichtung erreichbar. Die Anzahl beweglicher Teile in der Spannvorrichtung ist verringert, die Funktionssicherheit hierdurch weiter erhöht. Die in der Ratschenspannvorrichtung vorgesehene Klinke dient in Zusammenwirkung mit dem Ratschenhebel sowohl zur Rastfestlegung des Ratschenhebels in der Grundstellung als auch über den Sperrabschnitt zum Eingriff in das Ratschenzahnrad.

Auch ist durch die vorgeschlagene Ausgestaltung eine kostengünstige Herstellbarkeit der Ratschenspannvorrichtung möglich.

Das Sperrteil kann zwei stufenartig versetzt ausgebildete Sperrvorsprünge aufweisen. Zumindest einer der Sperrvorsprünge steht in einer das Ratschenzahnrad gegen Rücklauf in Entspannungsrichtung des gespannten Gurtes oder der gespannten Plane sichernden Eingriffsstellung. Das Sperrteil kann hierzu so ausgebildet sein, dass auch beide in Drehrichtung des Ratschenzahnrades hintereinander versetzt angeordneten Sperrvorsprünge zumindest in einer möglichen Stellung der Vorrichtung in sperrendem Eingriff zu zugeordneten Zähnen des Ratschenzahnrades stehen. Die beiden stufenartig versetzten Sperrvorsprünge können mit zwei unmittelbar in Drehrichtung des Ratschenzahnrades aufeinander folgenden Zähnen des Ratschenzahnrades zusammenwirken. Möglich ist diesbezüglich auch eine Anordnung der beiden Sperrvorsprünge zur Zusammenwirkung mit in Drehrichtung des Ratschenzahnrades distanziert zueinander angeordneten Sperrzähnen, zwischen welchen Sperrzähnen sich zumindest ein weiterer Sperrzahn erstreckt, der nicht von einem Sperrabschnitt der Klinke erfasst sein kann.

Der Sperrabschnitt der Klinke kann in weiterer Ausgestaltung in einer (verriegelten) Grundstellung bezüglich eines von einer Drehachse des Ratschenhebels ausgehenden Radius außerhalb einer in Drehrichtung des Ratschenhebels folgenden Sperrnase des Ratschenzahnrades angeordnet sein. Zufolge dieser Anordnung ist ermöglicht, dass die mit dem Sperrabschnitt bevorzugt einteilig ausgebildete Klinke insbesondere zur Aufhebung der Verrastung der Klinke mit dem Gegensperrabschnitt verschwenkt werden kann, wobei im Zuge dieser Verschwenkung der zur Zusammenwirkung mit dem Ratschenzahnrad ausgebildete Sperrabschnitt der Klinke frei aus den Eingriffsbereich der Zahnrad-Sperrnase herausschwenken kann.

In weiterer, auch bevorzugter, Ausgestaltung kann das Sperrteil mit dem Gegensperrabschnitt bewegungsgekoppelt sein. Bei einer Verlagerung des Gegensperrabschnittes, bspw. entgegen der Federkraft, im Zuge des Auffindens der Verrastungsstellung des mit der Klinke versehenen Ratschenhebels wird das Sperrteil entsprechend mitverlagert, bevorzugt über denselben Verlagerungsweg wie der Gegensperrabschnitt. Der zumindest eine Sperrvorsprung des Sperrteils ist entsprechend so ausgebildet, dass dieser bei einer üblichen Verlagerung des Gegensperrabschnittes zur Auffindung der Raststellung und somit entsprechender Verlagerung des Sperrteiles nicht die sperrende Sicherungsstellung des Ratschenzahnrades verliert. Diesbezüglich erweist sich die Ausgestaltung des Sperrteiles mit zwei stufenartig versetzt ausgebildeten Sperrvorsprüngen von Vorteil.

Das Sperrteil kann mit dem Gegensperrabschnitt einteilig und ggf. auch materialeinheitlich ausgebildet sein.

Zur Aufhebung der Ratschenzahnrad-Sicherungsstellung, d.h. zum Entspannen des Gurtes oder der Plane, wird in bekannter Weise der Ratschenhebel ohne Klinkeneingriff in das Ratschenzahnrad so weit geschwenkt, dass über den Ratschenhebel unmittelbar auf das Sperrteil eingewirkt wird. Das Sperrteil wird in eine das Ratschenzahnrad drehfrei-gebende Stellung verlagert, dies unter Mitschleppen des Gegensperrabschnittes gegen die auf diesen Gegensperrabschnitt einwirkende Federkraft.

Die Federkraft kann in üblicher Weise durch eine entsprechend angeordnete, gesonderte Feder gegeben sein, bspw. eine Druckfeder in Form einer Zylinderfeder oder dergleichen. Auch kann diesbezüglich eine Schenkelfeder oder eine Blattfeder vorgesehen sein oder auch ein elastisch rückstellfähiges Material, das einerseits auf den Gegensperrabschnitt einwirkt und sich andererseits bspw. an einem Abschnitt des Befestigungsteils abstützt.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: die Ratschenspannvorrichtung in perspektivischer Darstellung, eine Grundstellung betreffend;
- Fig. 2: eine Ansicht auf die Ratschenspannvorrichtung gemäß der Situation in Figur 1;
- Fig. 3: den Schnitt gemäß der Linie III-III in Figur 2;
- Fig. 4: eine der Figur 3 entsprechende Darstellung nach Aufhebung einer Verrastung;
- Fig. 5: eine Folgedarstellung gemäß Figur 4, betreffend eine Schwenkzwischenstellung eines Ratschenhebels;
- Fig. 6: eine im Wesentlichen der Figur 5 entsprechende Darstellung, jedoch nach Aufhebung eines Rasteingriffes des Ratschenhebels und Verlagerung des Ratschenhebels in Richtung auf eine maximale Endstellung;
- Fig. 7: eine der Figur 2 entsprechende Darstellung, eine alternative Ausführungsform betreffend.

### Beschreibung der Ausführungsformen

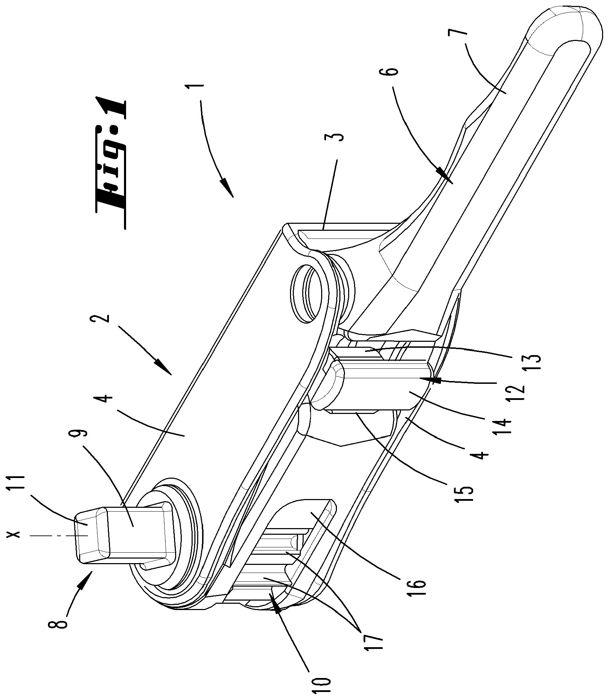

Dargestellt und beschrieben ist, zunächst mit Bezug zu Figur 1, eine Ratschenspannvorrichtung 1, bspw. für einen Pritschenaufbau eines nicht dargestellten Lastkraftwagens.

Eine Festlegung der Ratschenspannvorrichtung 1 kann an der Karosserie sowohl in horizontaler als auch in vertikaler Ausrichtung erfolgen, wobei eine horizontale Festlegung bevorzugt ist.

Zur Karosseriefestlegung besitzt die Ratschenspannvorrichtung 1 ein im Querschnitt im Wesentlichen U-förmig ausgestaltetes Befestigungsteil 2 mit einem U-Steg 3 und zwei, bevorzugt deckungsgleich gegenüberliegend ausgerichteten U-Schenkeln 4.

In dem U-Steg 2 sind, diesen durchsetzend, Befestigungsbohrungen 5 vorgesehen, durch welche nicht dargestellte Befestigungsschrauben o. dgl. zur Festlegung der Ratschenspannvorrichtung 1 treten können.

Im Randbereich eines jeweils freien Stirnendes sind die U-Schenkel 4 von zueinander fluchtend ausgerichteten, bevorzugt kreisrunden Lageröffnungen durchsetzt.

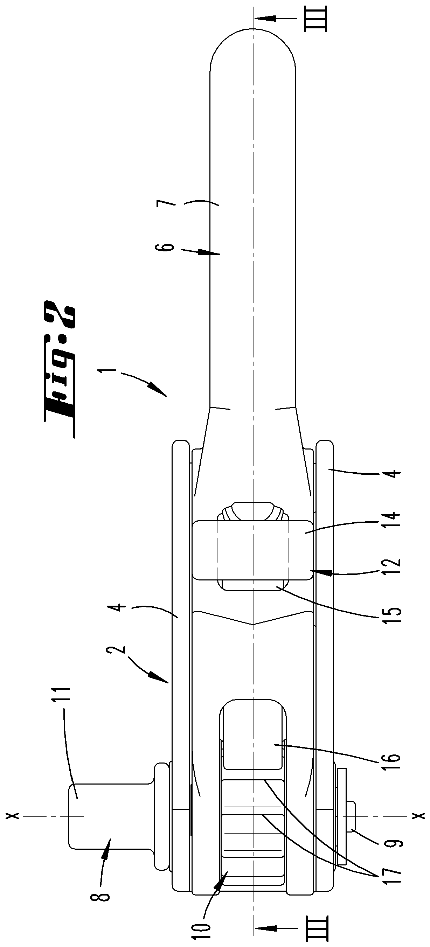

In dem Befestigungsteil 2 ist schwenkbeweglich ein Ratschenhebel 6 angeordnet. Dieser besitzt einen in Erstreckungsrichtung des Ratschenhebel 6 mit Bezug auf eine Grundstellung gemäß den Figuren 1 und 2 über das Befestigungsteil 2 frei zum Ergreifen hinausragenden Betätigungsabschnitt 7. Abgewandt dem Betätigungsabschnitt 7 ist der Ratschenhebel 6 gabelförmig ausgebildet, wobei in den Gabelschenkeln zwei aufeinander zu gerichtete, bevorzugt kreisrunde Lageraugen ausgebildet sind, welche jeweils im montierten Zustand axial um eine Schwenkachse x angeordnet sind.

Das in Achsrichtung betrachtete Abstandsmaß der voneinander weg weisenden Außenstirnflächen im Bereich der Lageraugen ist etwas geringer gewählt als das Abstandsmaß der aufeinander zu weisenden Innenflächen der befestigungsteilseitigen U-Schenkel 4.

Der Ratschenhebel 6 ist über eine Antriebseinheit 8 an dem Befestigungsteil 2 im Bereich der Lageröffnungen angelenkt. Die Antriebseinheit 8 setzt sich im Wesentlichen aus einer Antriebswelle 9 und einem drehfest mit der Antriebswelle 9 verbundenen Ratschenzahnrad 10 zusammen. Die Antriebswelle 9 ist im Bereich der U-schenkelseitigen Lageröffnungen gelagert und bevorzugt in Achsrichtung gesichert.

Das Ratschenzahnrad 10 erstreckt sich im Wesentlichen im Bereich zwischen den Gabelschenkeln des die Lageraugen aufweisenden gabelförmigen Endes des Ratschenhebels 6, wobei das Ratschenzahnrad 10 relativ zu dem Ratschenhebel 6 drehbar ist.

Aus der Antriebswelle 9 ist an einem freien Ende ein axial ausgerichteter, über die Außenfläche eines U-Schenkels 4 des Befestigungsteiles 2 frei hinausragender Vierkant 11 ausgeformt. Dieser dient bspw., wie auch bevorzugt, zur formschlüssigen Zusammenwirkung mit einer Wickelwelle.

Die zentrale Körperachse der Antriebswelle 9 bildet die geometrische Schwenkachse x, um welche das Ratschenzahnrad 10 drehbar und der Ratschenhebel 6 schwenkbar ist.

Zur mitschleppenden Einwirkung des Ratschenhebels 6 auf das Ratschenzahnrad 10 und somit auf die Antriebseinheit 8 ist an dem Ratschenhebel 6 eine schwenkbeweglich, ggf. aber auch schiebebeweglich, angeordnete Klinke 12 vorgesehen. Die Klinke 12 erstreckt sich bevorzugt mittig zwischen den gabelschenkelartigen Abschnitten des Ratschenhebels 6, wobei die diesbezügliche Klinken-Schwenkachse y parallel ausgerichtet ist zu der Schwenkachse x des Ratschenhebels 6 bzw. zur diesbezüglichen Drehachse der Antriebseinheit 8.

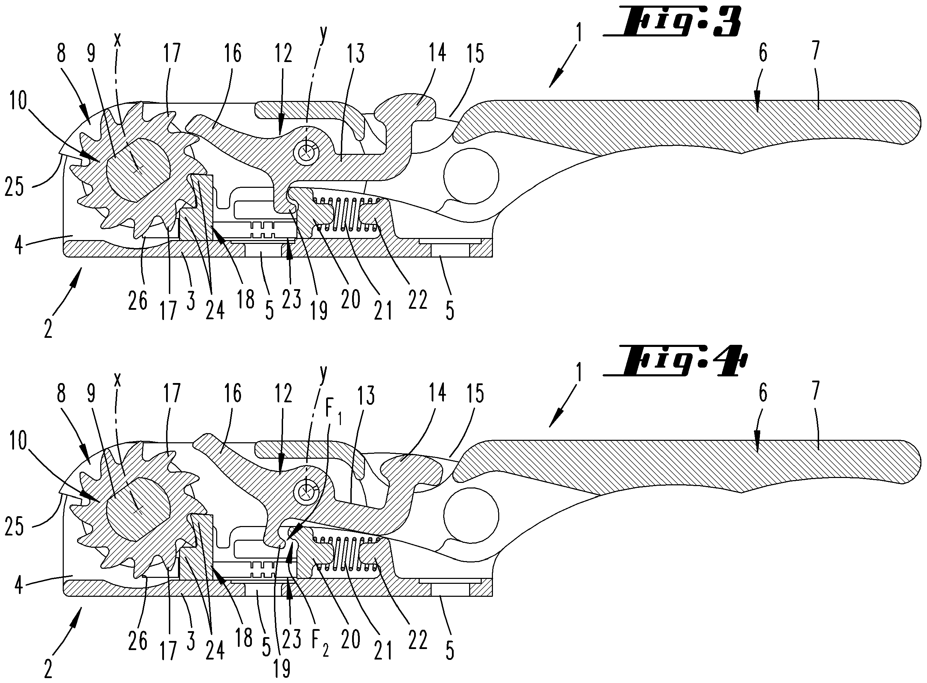

Die Anlenkung der Klinke 12 an dem Ratschenhebel 6 ist mit Bezug auf eine Grundstellung der Ratschenspannvorrichtung 1 gemäß den Darstellungen in den Figuren 1 bis 3 etwa mittig bezüglich der Längserstreckung des Befestigungsteiles 2 bzw. der U-Schenkel 4 (vgl. bspw. Figur 3).

Ausgehend von dem Anlenkbereich, aber auch unabhängig hiervon, weist die Klinke 12, insbesondere im Fall der Anlenkung, einen Betätigungshebel 13 bzw. ein Betätigungsteil auf. Dessen Betätigungsende 14 kann in einer fensterartigen Öffnung 15 des Ratschenhebels 6 zur Betätigung frei liegen. Soweit es sich nicht um einen Betätigungshebel handelt, kann es sich bspw. um einen Betätigungsschieber handeln.

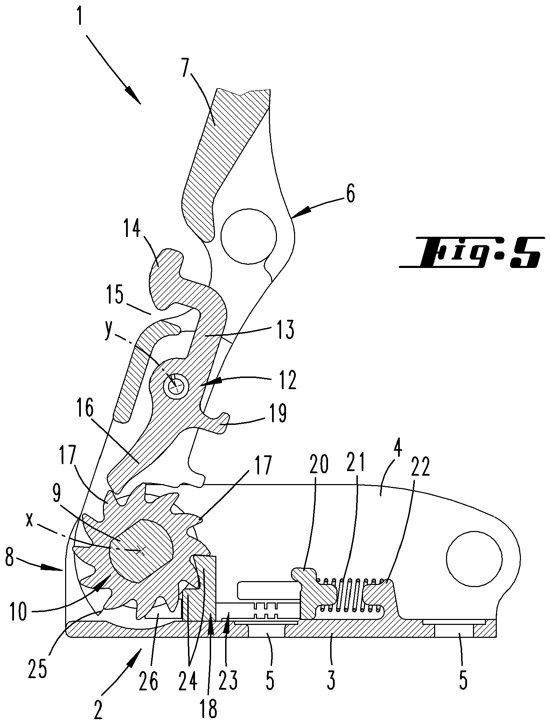

Entgegengesetzt zu dem Betätigungsteil, ggf. Betätigungshebel 13, kann sich ausgehend von dem Halterungsbereich, ggf. der Klinken-Schwenkachse y, ein fingerartiger Sperrabschnitt 16 zum Eingriff in das Ratschenzahnrad 10 erstrecken. Das freie Ende des Sperrabschnittes 16 wirkt im Zuge des Spannvorganges mit einer Sperrnase 17 des Ratschenzahnrades 10 zusammen, so dass über die Sperrnase 17 ein Mitschleppen der gesamten Antriebseinheit 8 um die Schwenkachse x herum erreicht werden kann, wenn in der entsprechenden Stellung der Klinke 12 gemäß der Darstellung in Figur 5 der Ratschenhebel 6 um die Schwenkachse x verschwenkt wird.

In der Grundstellung gemäß den Figuren 1 bis 3 greift das freie Ende des Sperrabschnittes 16 derart in den Bereich einer Lücke zweier in Drehrichtung des Ratschenzahnrades 10 hintereinander angeordneter Sperrnasen 17 ein, dass durch Verschwenken der Klinke 12 insgesamt zufolge einer Betätigung des Betätigungshebels 13 durch Drücken auf das Betätigungsende 14 das freie Sperrabschnittende kollisionsfrei aus dem Bereich des Ratschenzahnrades 10 austreten kann.

Die jeweilige Drehstellung des Ratschenzahnrades 10 ist über ein Sperrteil 18 gesichert. Dieses verhindert ein Zurückdrehen des Ratschenzahnrades 10 entgegen der Spannrichtung.

Das Sperrteil 18 ist von den Sperrnasen 17 im Zuge des Spannvorganges und somit auch nur in einer Drehrichtung des Ratschenzahnrades 10 überlaufbar, wobei das Sperrteil 18 entgegen der Kraft einer das Sperrteil 18 in die Sperrstellung beaufschlagenden Federkraft ausweichen kann.

Auch in der Grundstellung der Ratschenspannvorrichtung 1 ist das Ratschenzahnrad 10 über das Sperrteil 18 entgegen der Spannrichtung drehgesichert. In dieser Stellung liegt die freie Stirnfläche des Sperrabschnittes 16 in Umfangsrichtung des Ratschenzahnrades 10 beabstandet zu der in Spannrichtung nächstliegenden Sperrnase 17. Diese Beabstandung bietet die Möglichkeit der kollisionsfreien Verschwenkung der Klinke 12.

Der Ratschenhebel 6 ist des Weiteren in der Grundstellung gesichert. Diese Sicherung kann, wie auch bevorzugt, durch eine Verrastung gegeben sein.

Für die genannte Sicherung ist ein Sicherungsteil 19 vorgesehen, das gemäß Figur 3 einen befestigungsteilseitigen Gegensperrabschnitt 20 hintergreift. Im Einzelnen, siehe auch Figuren 3 und 4, kann das Sicherungsteil 19 eine Sicherungsfläche F1 ausbilden und das Gegenrastteil 20 eine Gegenfläche F2. Die Sicherungsfläche F1 ist von einem Krümmungsinneren dieser Fläche F1 gesehen konvex ausgebildet und die Fläche F2 gesehen von demselben Krümmungsinneren her in einem möglichen Zusammenwirkungsbereich der Flächen konkav, kann aber dann auch in konvex übergehen. In der Darstellung der Figur 3 ist die Grundstellung wiedergegeben, wobei der Ratschenhebel 6 soweit niedergedrückt ist, dass die Flächen F1 und F2 nicht in Anlage zueinander sind. Bei einer Bewegung in Öffnungsrichtung können sie jedoch in Anlage zueinander kommen. Die Krümmungen der Flächen F1 und F2 können nun entweder so ausgebildet sein, dass bei einer erheblichen Kraftaufwendung auch ohne eine weitere Betätigung, insbesondere ohne eine Betätigung des Betätigungshebels 13 beim Ausführungsbeispiel, das Sicherungsteil 19 und das Gegenrastteil 20 außer Eingriff kommen können. Alternativ können die Krümmungen und die Art des Hintergriffs in der Grundstellung auch so ausgebildet sein, dass die Flächen nur aufgrund einer besonderen Betätigung, beim Ausführungsbeispiel insbesondere einer Betätigung des Betätigungshebels 13 an dem Betätigungsende 14 und damit einer Bewegung des Sicherungsteil 19 aus dem Hintergriff zu dem Gegenrastteil 20 heraus, außer Eingriff kommen können.

Das Sicherungsteil 19 ist an der Klinke 12 vorgesehen. Das Sicherungsteil 19 kann hakenartig gebildet sein. Es kann als Rastvorsprung wirken. Das Sicherungsteil 19 kann auch einteilig mit der Klinke 12 ausgebildet sein.

Zur Betätigung der Ratschenspannvorrichtung 1 ist entsprechend die Sicherung, im gegebenen Fall die Verrastung, zunächst aufzuheben. Bei der Ausbildung des Sicherungsteils 19 an der Klinke 12 ist dies durch entsprechende Schwenkverlagerung der Klinke 12, bei welcher der Rastvorsprung 19 den Hintergriff zu dem Gegensperrabschnitt 20 verliert (vgl. Figur 4), erreicht.

Aus dieser Stellung gemäß Figur 4 heraus kann dann im gegebenen Fall eine Verschwenkung des Ratschenhebels 6 um die Schwenkachse x erfolgen, wobei mit rückverlagerter Klinke 12 gemäß Figur 5 der mitschleppende Eingriff des Sperrabschnittes 16 in das Ratschenzahnrad 10 gegeben ist. Durch Hin- und Herschwenken des Ratschenhebels 6 um die Schwenkachse x ist ein Spannen über die Antriebseinheit 8 erreichbar.

In bevorzugter Ausgestaltung, bei einer Anlenkung in dem Anlenkbereich, ist die Klinke 12 in die bspw. in Figur 5 dargestellte Grundstellung federbelastet, bspw. durch Anordnung einer nicht dargestellten Schenkelfeder o. dgl.

Der Gegensperrabschnitt 20 ist beweglich ausgebildet. Insbesondere kann die Beweglichkeit eine Schiebebeweglichkeit durch eine verschiebbare Anordnung auf dem einen Boden des Befestigungsteiles 2 ausbildenden U-Steg 3 sein. Diese Beweglichkeit des Gegensperrabschnittes 20 ist insbesondere notwendig zur Erlangung der Raststellung gemäß Figur 3, wobei das Sicherungsteil 19 den Gegensperrabschnitt 20 im Zuge der Rückschwenkung des Ratschenhebels 9 in Richtung seiner Grundstellung belastet, woraufhin dieser ausweichend gegen die Kraft einer Rückstellfeder 21 abschließend das Sicherungsteil 19 wieder überfängt.

Die Rückstellfeder 21 kann gemäß der dargestellten Ausführungsform in Art einer Zylinder-Druckfeder ausgebildet sein. Diese umfasst bspw. einen an dem Gegensperrabschnitt 20 ausgeformten Zapfen und/oder stützt sich abgewandt des Gegensperrabschnittes 20 an einen starr an dem U-Steg 3 des Befestigungsteiles 2 angeformten Abstützbock 22 ab.

Der Gegensperrabschnitt 20 und das Sperrteil 18 können, wie auch dargestellt und bevorzugt, bewegungsgekoppelt sein, darüber hinaus, wie weiter bevorzugt, einteilig ausgebildet sein. Es kann so eine rahmenartige Ausgestaltung gegeben sein, die schlittenartig im Bereich des U-Steges 3 des Befestigungsteiles 2 geführt ist. Die Verlagerungsrichtung des so gebildeten Schlittenteiles 23 ist quergerichtet zur Erstreckungsrichtung der Schwenkachse x.

Im Bereich der quer zur Schieberichtung des Schlittenteils 23 sich erstreckenden Rahmenabschnitte ist einerseits das Sperrteil 18 und andererseits der Gegensperrabschnitt 20 ausgeformt.

Das Sicherungsteil 19 kann zur Rastfestlegung des Ratschenhebels 6 durch die gegebene mittige Rahmenöffnung des Schlittenteiles 23 tauchen, zum Hintergreifen des Gegensperrabschnitts 20.

Das Sperrteil 18 kann, wie auch dargestellt und bevorzugt, zwei stufenartig in Umfangsrichtung des Ratschenzahnrades 10 versetzt ausgebildete Sperrvorsprünge 24 aufweisen, zur sperrenden Zusammenwirkung mit einer jeweils zugeordneten Sperrnase 17 des Ratschenzahnrades 10. Die Sperrvorsprünge 24 sind insbesondere bezüglich ihrer Erstreckungslänge in Verschieberichtung r des Schlittenteiles 23 so gewählt, dass eine zwangsläufige Verlagerung des Schlittenteiles 23 bei dessen Aussteuerung im Zuge des Einschwenkens des Ratschenhebels 6 in Richtung auf seine Grundstellung und dem damit einhergehenden Überlaufen des klinkenseitigen Rastvorsprunges 19 die Sperrstellung zwischen Sperrteil 18 und Ratschenzahnrad 10 nicht aufgehoben wird. Über den möglichen Ausweichweg des Gegensperrabschnittes 20 ist das Ratschenzahnrad 10 gegen Rückdrehung desselben entgegen der Spannrichtung gesichert.

Die Spannstellung kann nur willensbetont aufgehoben werden, dies durch gezielte Verlagerung des Sperrteils 18 in eine das Ratschenzahnrad 10 freigebende Stellung. Hierzu ist das Sperrteil 18 um ein Maß in Verschieberichtung r zu verlagern, welches größer ist als das Maß, welches sich beim Überlaufen des Gegensperrabschnittes 20 durch das Sicherungsteil 19 ergibt.

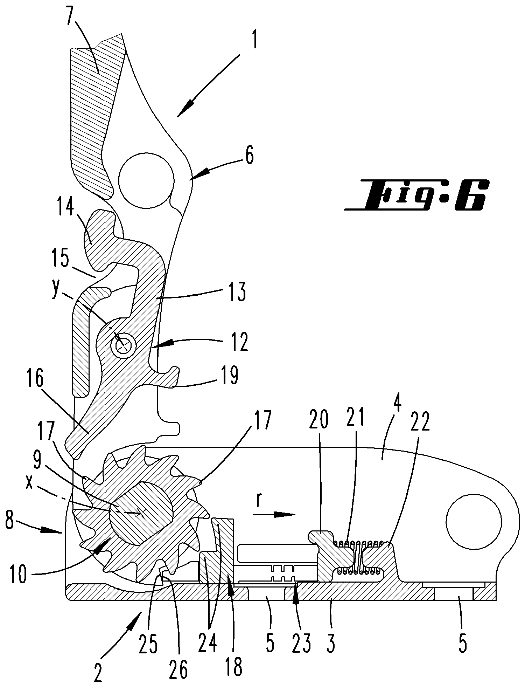

Hierzu wird der Ratschenhebel 6, bevorzugt unter Halten der Klinke 12 in einer das Ratschenzahnrad 10 nicht beaufschlagenden Stellung gemäß Figur 6, soweit um die Schwenkachse x geschwenkt, bis ein an dem Ratschenhebel 6 im Bereich zumindest eines dessen Gabelbereiche ausgebildeter Anschlag 25 gegen einen mit dem Sperrteil 18, darüber hinaus insgesamt mit dem Schlittenteil 23, starr verbundenen Ausleger 26 tritt und unter weiterer Schwenkverlagerung des Ratschenhebels 6 das Schlittenteil 23 mitsamt dem Sperrteil 18 zur vollständigen Freigabe des Ratschenzahnrades 10 in Verschieberichtung r gegen die Kraft der Rückstellfeder 21 verlagert wird (siehe strichpunktierte Darstellung in Figur 6).

Insbesondere zufolge der gegen Federkraft verlagerbaren Anordnung des Gegensperrabschnittes 20 und der auch hierdurch ermöglichten einteiligen Ausgestaltung von Sperrabschnitt 16 und Sicherungsteil 19 unter Bildung einer Klinke 12 ist eine handhabungstechnisch günstige, gebrauchsvorteilhafte Ausgestaltung einer Ratschenspannvorrichtung 1 gegeben. Die Bauteile sind auf ein Minimum reduziert. Es wurde festgestellt, dass eine Ratschenspannvorrichtung 1 gemäß der vorgeschlagenen Ausgestaltung hinsichtlich der Bedienbarkeit bei Verschmutzung und/oder Vereisung funktionssicherer ist.

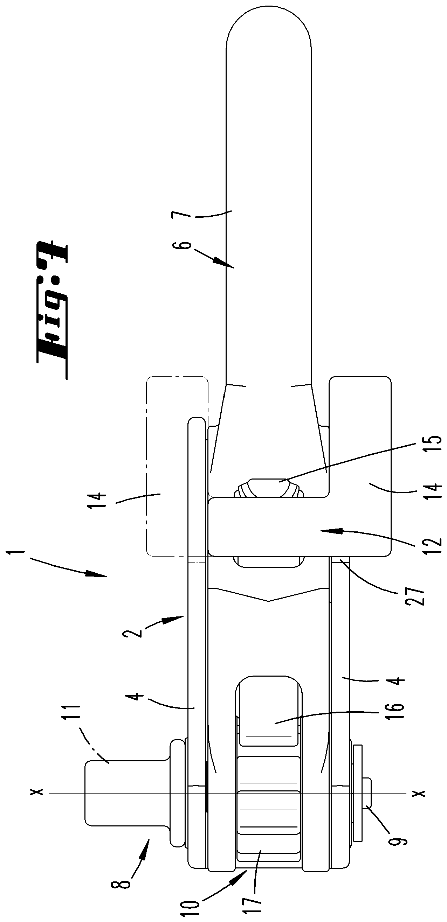

Figur 7 zeigt eine Ausführungsform, bei welcher das Ende 14 des klinkenseitigen Betätigungshebels 13 mit Bezug auf eine Ansicht gemäß Figur 7 über zumindest einen zugeordneten U-Schenkel 4 hinaus seitlich erweitert ist, wozu der U-Schenkel 4 eine entsprechend angepasste Aussparung 27 aufweisen kann. Das Betätigungsende 14 kann des Weiteren, wie auch in Figur 7 ersichtlich, mit Bezug auf die Ansicht sich weiter seitlich entlang des Betätigungsabschnittes 7 des Ratschenhebels 6 erstrecken, bspw. zur Ermöglichung einer Daumenbetätigung der Klinke 12 bei Ergreifen des Betätigungsabschnittes 7 durch dieselbe Hand.

Diese seitliche Erstreckung des Betätigungsendes 14 kann einseitig, wie dargestellt, vorgesehen sein oder auch, wie weiter in strichpunktierter Linienart dargestellt, beidseitig des Betätigungsabschnittes 7.

**Liste der Bezugszeichen**

| | | | |
|---|---|---|---|
| 1 | Ratschenspannvorrichtung | 27 | Aussparung |
| 2 | Befestigungsteil | | |
| 3 | U-Steg | | |
| 4 | U-Schenkel | | |
| 5 | Befestigungsbohrung | r | Verschieberichtung |
| 6 | Ratschenhebel | x | Schwenkachse |
| 7 | Betätigungsabschnitt | y | Klinken-Schwenkachse |
| 8 | Antriebseinheit | | |
| 9 | Antriebswelle | | |
| 10 | Ratschenzahnrad | | |
| 11 | Vierkant | | |
| 12 | Klinke | | |
| 13 | Betätigungshebel | | |
| 14 | Betätigungsende | | |
| 15 | fensterartige Öffnung | | |
| 16 | Sperrabschnitt | | |
| 17 | Sperrnase | | |
| 18 | Sperrteil | | |
| 19 | Sicherungsteil | | |
| 20 | Gegensperrabschnitt | | |
| 21 | Rückstellfeder | | |
| 22 | Abstützbock | | |
| 23 | Schlittenteil | | |
| 24 | Sperrvorsprung | | |
| 25 | Anschlag | | |
| 26 | Ausleger | | |

## Patentansprüche

1. Ratschenspannvorrichtung (1) zum Spannen von Gegenständen wie Gurten oder Planen, mit einem Ratschenhebel (6), einem Ratschenzahnrad (10) und einem Befestigungsteil (2), wobei das Ratschenzahnrad (10) in dem Befestigungsteil (2) gelagert ist und mit einem Sperrteil (18) zusammenwirkt, wobei weiter der Ratschenhebel (6) in einer Grundstellung an dem Befestigungsteil (2) an einem gegen Federkraft beweglich ausgebildeten Gegensperrabschnitt (20) gesichert ist, **dadurch gekennzeichnet, dass** an dem Ratschenhebel (6) eine beweglich angeordnete Klinke (12) vorgesehen ist und dass die Klinke (12) ein Sicherungsteil (19) aufweist, zur Zusammenwirkung mit dem Gegensperrabschnitt (20).

2. Ratschenspannvorrichtung nach Anspruch 1, **dadurch gekennzeichnet, dass** die Klinke (12) mit einem zum Eingriff in das Ratschenzahnrad (10) vorgesehenen Sperrabschnitt (16) ausgebildet ist.

3. Ratschenspannvorrichtung nach Anspruch2, **dadurch gekennzeichnet, dass** die Klinke (12) mit dem Sperrabschnitt (16) einteilig ausgebildet ist.

4. Ratschenspannvorrichtung nach einem der vorhergehenden Ansprüche, **dadurch gekennzeichnet, dass** das Sperrteil (18) zwei stufenartig versetzt ausgebildete Sperrvorsprünge (24) aufweist.

5. Ratschenspannvorrichtung nach einem der Ansprüche 2 oder 3, **dadurch gekennzeichnet, dass** der Sperrabschnitt (16) der Klinke (12) in einer (verriegelten) Grundstellung bezüglich eines von einer Schwenkachse (x) des Ratschenhebels (6) ausgehenden Radius außerhalb einer in Schwenkrichtung des Ratschenhebels (6) folgenden Sperrnase (17) des Ratschenzahnrades (10) angeordnet ist.

6. Ratschenspannvorrichtung nach einem der vorhergehenden Ansprüche, **dadurch gekennzeichnet, dass** das Sperrteil (18) mit dem Gegensperrabschnitt (20) bewegungsgekoppelt ist.

7. Ratschenspannvorrichtung nach Anspruch 6, **dadurch gekennzeichnet, dass** das Sperrteil (18) mit dem Gegensperrabschnitt (20) einteilig ausgebildet ist.

## Claims

1. Ratchet tensioning device (1) for tensioning objects such as belts or tarpaulins, comprising a ratchet lever (6), a ratchet gear (10) and a fastening part (2), the ratchet gear (10) being mounted in the fastening part (2) and cooperating with a latching part (18), the ratchet lever (6) further being secured in a home position on the fastening part (2) on a counter latching portion (20) designed to be able to move against spring force, **characterised in that** a movably arranged pawl (12) is provided on the ratchet lever (6) and **in that** the pawl (12) has a securing part (19) for cooperating with the counter latching portion (20).

2. Ratchet tensioning device according to claim 1, **characterised in that** the pawl (12) is designed to have a latching portion (16) provided for engagement in the ratchet gear (10).

3. Ratchet tensioning device according to claim 2, **characterised in that** the pawl (12) is integral with the latching portion (16).

4. Ratchet tensioning device according to any of the preceding claims, **characterised in that** the latching part (18) has two latching projections (24) which are designed so as to be offset in a stepped manner.

5. Ratchet tensioning device according to either claim 2 or claim 3, **characterised in that** the latching portion (16) of the pawl (12) is arranged in a (locked) home position with respect to a radius starting from a pivot axis (x) of the ratchet lever (6), outside a latching lug (17) of the ratchet gear (10), which lug follows in a pivot direction of the ratchet lever (6).

6. Ratchet tensioning device according to any of the preceding claims, **characterised in that** the latching part (18) is motion-coupled to the counter latching portion (20).

7. Ratchet tensioning device according to claim 6, **characterised in that** the latching part (18) is integral with the counter latching portion (20).

## Revendications

1. Dispositif tendeur à cliquet (1) pour tendre des objets tels que des courroies ou des bâches, comprenant un levier à cliquet (6), une roue dentée à cliquet (10) et une pièce de fixation (2), dans lequel la roue à cliquet (10) est montée dans la pièce de fixation (2) et coopère avec un élément de blocage (18), dans lequel en outre le levier à cliquet (6) est, dans une position de base relativement à la pièce de fixation (2), fixé à/en prise avec une partie de contre-blocage (20) qui est conçue mobile à l'encontre d'une force élastique, **caractérisé en ce qu'**est prévu un cliquet (12) monté mobile au levier à cliquet (6) et **en ce que** le cliquet (12) comporte une partie de fixation/prise (19) pour coopérer avec la partie de contre-blocage (20).

2. Dispositif tendeur à cliquet selon la revendication 1, **caractérisé en ce que** le cliquet (12) est formé avec une partie de blocage (16) prévue pour engager la roue dentée à cliquet (10).

3. Dispositif tendeur à cliquet selon la revendication 2, **caractérisé en ce que** le cliquet (12) est formé d'une seule pièce avec la partie de blocage (16).

4. Dispositif tendeur à cliquet selon l'une des revendications précédentes, **caractérisé en ce que** la partie de blocage (18) présente deux saillies de blocage (24) en forme de gradins décalés.

5. Dispositif tendeur à cliquet selon l'une des revendications 2 ou 3, **caractérisé en ce que** dans une position de base (verrouillée), la partie de blocage (16) du cliquet (12) est agencée en-dehors d'un nez/ergot de blocage (17) de la roue dentée à cliquet (10) qui suit dans la direction de pivotement du levier de cliquet (6) par rapport à un rayon partant d'un axe de pivotement (x) du levier de cliquet (6).

6. Dispositif tendeur à cliquet selon l'une des revendications précédentes, **caractérisé en ce que** l'élément de blocage (18) est couplée en mouvement avec la partie de contre-blocage (20).

7. Dispositif tendeur à cliquet selon la revendication 6, **caractérisé en ce que** l'élément de blocage (18) est formée d'une seule pièce avec la partie de contre-blocage (20).
